# FASCICULE DE BREVET EUROPEEN

(11) **EP 1 087 912 B1**
(45) Date de publication et mention de la délivrance du brevet: **04.12.2002**
(21) Numéro de dépôt: 99925062.4
(22) Date de dépôt: 10.06.1999
(51) Int. Cl.: C03B 37/04, D21H 13/40, D21H 17/00

(54) **DISPOSITIF ET PROCEDE DE CENTRIFUGATION DE FIBRES MINERALES**
VERFAHREN UND VORRICHTUNG ZUM ZENTRIFUGIEREN VON MINERALFASERN
DEVICE AND METHOD FOR CENTRIFUGING MINERAL FIBERS

(30) Priorité: 12.06.1998 FR 9807461
(43) Date de publication de la demande: 04.04.2001
(73) Titulaire: SAINT-GOBAIN ISOVER, 92400 Courbevoie (FR)
(72) Inventeur: TUFFAL, Guy, 92150 Suresnes (FR); GUYOT, Daniel, F-60290 Rantigny (FR)
(74) Mandataire: Renous Chan, Véronique
(86) Numéro de dépôt international: FR9901376
(87) Numéro de publication internationale: WO99065835

(56) Documents cités:
- EP-A- 0 267 092
- EP-A- 0 430 770
- EP-B- 0 189 354
- EP-B- 0 519 797

## Description

L'invention a trait à la fabrication de fibres minérales du type fibres de verre de diamètre fin, notamment d'au plus 3 µm, en vue de les incorporer dans des papiers utilisés plus particulièrement pour réaliser des filtres aérosols ou des séparateurs de batterie.

Il est en effet connu des brevets EP-B-0 267 092 et EP-B-0 430 770 des feuilles papetières pour de telles applications contenant des fibres. Il s'agit généralement d'un mélange de deux types de fibres : des fibres " fines " d'un diamètre moyen de l'ordre de 2 à 3 µm au moins et des fibres " très fines " d'un diamètre inférieur à 1 µm. Les premières sont plus particulièrement destinées à renforcer mécaniquement le papier, à lui donner le " gonflant " nécessaire, tandis que les secondes créent la porosité lui conférant ses propriétés de filtration. Comme proposé dans les deux brevets précités, ces deux types de fibre peuvent avantageusement être obtenus par un procédé dit de centrifugation interne, largement employé par ailleurs pour fabriquer des fibres utilisées pour réaliser des produits d'isolation thermique ou phonique. Schématiquement, ce procédé consiste à introduire un filet de verre fondu dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz. Ce procédé connu a fait l'objet de nombreux perfectionnements dont notamment ceux enseignés dans les brevets EP-B-0 189 354 ou EP-B-0 519 797.

Pour l'isolation thermique ou phonique, les fibres fabriquées par un tel procédé ont généralement un diamètre supérieur à 3 µm, généralement d'environ 4 à 4,5 µm jusqu'à 12 µm : on ne peut donc pas utiliser le procédé dans ses paramètres de fonctionnement conventionnels pour obtenir les fibres " fines " ou " très fines " évoquées plus haut. Certaines adaptations sont donc nécessaires pour obtenir par ce procédé des fibres fines. Ainsi le brevet EP-B-0 267 092 précité propose notamment une sélection particulière de la vitesse des gaz d'étirage pour les obtenir.

L'invention a alors pour but une amélioration du dispositif et du procédé de fibrage par centrifugation interne de fibres minérales fines de diamètre au plus 3 µm, amélioration visant notamment la qualité des fibres obtenues et/ou leur rendement de production.

L'invention a tout d'abord pour objet un dispositif de centrifugation interne de fibres minérales de diamètre inférieur ou égal à 3 µm, comprenant un centrifugeur muni d'une bande périphérique percée d'orifices et qui présente une hauteur de fibrage inférieure ou égale à 35 mm, de préférence inférieure ou égale à 32,5 ou 30 mm, et par exemple comprise entre 16 et 32,5 mm.

Dans le cadre de l'invention, on définit la " hauteur de fibrage " du centrifugeur par la distance séparant le point le plus haut de la bande périphérique des orifices les plus " bas " de celle-ci, " haut " et " bas " se comprenant en référence au centrifugeur disposé en position de centrifugation, c'est-à-dire selon un axe (de rotation) sensiblement vertical.

Conventionnellement, on fabrique des fibres de diamètre standard pour l'isolation à l'aide de centrifugeurs de bande périphérique large, ayant, pour donner un ordre de grandeur, une hauteur de fibrage d'au moins 40 mm. On a en effet intérêt à choisir une hauteur de fibrage importante, puisqu'elle permet d'augmenter le nombre d'orifices dans la bande périphérique, d'avoir un nombre de rangées d'orifices élevé conduisant à augmenter la capacité de production, souvent exprimée par la " tirée " égale au nombre de kg de fibres de verre fabriquée par jour et par centrifugeur. Ce raisonnement a bien sûr des limites, car la capacité de production est également liée à bien d'autres paramètres et ne doit pas être obtenue au prix d'une quantité trop significative d'infibrés, de grains, de risques dé dysfonctionnement du centrifugeur, etc... Ainsi, il faut également prendre en compte, par exemple, les gradients de température qui peuvent s'installer sur la hauteur de la bande périphérique ou le fait que les gaz d'étirage à haute température ont ou n'ont pas le même impact sur l'ensemble des rangées d'orifices.

Il s'est avéré que l'on pouvait considérablement augmenter la qualité des fibres dites " fines ", de moins de 3 µm de diamètre, en sélectionnant une hauteur de fibrage particulière, en dessous de 35 à 30 mm ou moins, c'est-à-dire à des valeurs bien inférieures à celles utilisées conventionnellement et celles utilisées jusqu'alors pour faire des fibres dites " fines " de moins de 3 µm. Avec un tel type de centrifugeur, de moindre hauteur, on a pu constater que les fibres " fines " produites étaient beaucoup plus stables dimensionnellement, avec une quantité très réduite en défauts du type infibrés/grains ou du type amalgames de fibres recollées, et qu'elles avaient des propriétés mécaniques très satisfaisantes, notamment en termes de valeur de limite élastique à la traction.

En outre, la mise en oeuvre du centrifugeur était plus simple, moins délicate que celle rencontrée jusqu'à maintenant dans la production de fibres " fines ". Cette augmentation dans la qualité et cette plus grande faisabilité industrielle n'ont en outre pas été obtenues au prix d'une diminution de la capacité de production insupportable économiquement, d'une part parce que les fibres " fines " à application très particulière ont une forte valeur ajoutée et que l'on peut aussi se permettre une capacité de production un peu inférieure à celle obtenue pour des fibres standard, et d'autre part parce qu'il a pu être possible de limiter au moins en partie la chute de capacité de production en adaptant, notamment en augmentant, la densité de perçage de la bande périphérique.

Avantageusement, le centrifugeur selon l'invention est choisi de diamètre moyen inférieur ou égal à 800 mm, notamment d'au moins 200 mm, par exemple d'environ 200, 400, ou 600 mm.

Pour obtenir des fibres " fines " de 3 µm au plus de diamètre, il est préférable que les orifices du centrifugeur soient de diamètre d'au plus 1,5 mm, par exemple d'au plus 1,2 mm, notamment compris entre 1,1 et 0,5 mm, par exemple entre 0,9 et 0,7 mm (on se réfère ici à un " diamètre ", car ces orifices sont généralement tous choisis circulaires, il n'est pas exclu cependant que les orifices ne soient pas circulaires, dans ce cas il faut comprendre "diamètre " par " plus grande dimension ").

Selon l'invention, les orifices de la bande périphérique du centrifugeur sont regroupés en rangées disposées en cercles concentriques sur la hauteur de la bande. Dans l'invention, au moins deux rangées adjacentes ont des orifices de diamètres différents. Il est avantageux, que les rangées aient, du haut vers le bas de la bande périphérique, des diamètres d'orifices décroissants (généralement tous les orifices d'une même rangée ont le même diamètre). On peut ainsi prévoir, du haut vers le bas, n rangée(s) d'orifices d'un diamètre donné, puis p rangée(s) d'orifices d'un diamètre moindre, puis t rangée(s) d'orifices d'un diamètre encore réduit, etc... avec : n, p et t ≥ 1.

En établissant ainsi une sorte de " gradient " décroissant dans la taille d'orifices du haut vers le bas, on a constaté une amélioration dans la qualité du fibrage. On a pu ainsi réduire les différences dans la façon dont les filaments issus des rangées les plus hautes étaient fibrés par rapport à ceux des rangées les plus basses : ce " gradient " permet un développement des filaments primaires en sortie d'orifices et un étirage limitant les croisements de trajectoire, et donc les chocs, entre les fibres en cours d'étirage provenant de rangées d'orifices différentes d'où le gain de qualité observé.

De préférence, les orifices du centrifugeur sont regroupés en rangées espacées les unes des autres d'une distance comprise entre 1 et 2 mm, notamment entre 1,2 et 1,8 mm, avec de préférence un pas de décalage d'une rangée à l'autre compris entre 1 et 2 mm, notamment entre 1,8 et 1,3 mm et un espacement entre deux orifices d'une même rangée compris entre 2,2 et 1,4 mm, notamment entre 2,1 et 1,6 mm.

Avantageusement le dispositif selon l'invention comprend un moyen d'étirage gazeux à haute température sous forme d'un brûleur annulaire. Il s'est ainsi révélé particulièrement utile dans le contrôle de la production de fibres " fines " de prévoir un moyen pour canaliser ces gaz d'étirage à haute température et/ou la matière minérale éjectée du centrifugeur se transformant de filaments en fibres, moyen sous forme d'une couronne de soufflage à gaz non chaud, à température ambiante par exemple. On peut aussi prévoir optionnellement un moyen de chauffage externe des parois du centrifugeur, notamment dans sa partie la plus basse, sous forme d'un inducteur annulaire. Tous ces éléments sont notamment décrits dans leur principe de fonctionnement dans les brevets EP-B-0 189 354 et EP-B-0 519 797 précités.

Peut aussi être utilisé un moyen de chauffage " interne " au centrifugeur, du type brûleur interne. Celui-ci peut remplir différents rôles, notamment de terminer le conditionnement thermique du verre fondu dans le " panier " du centrifugeur (terme explicité plus bas à l'aide des figures), de maintenir à température appropriée la réserve de verre dans le centrifugeur, enfin de refondre en continu les fibres susceptibles de s'être recollées sur les parois externes du centrifugeur.

Le moyen de chauffage " externe " du type inducteur annulaire peut être avantageusement combiné à ce moyen de chauffage interne, il permet également de mieux contrôler la température de la réserve de verre et la refonte des fibres recollées. Il a en fait été constaté que, généralement, pour de faibles tirées il était suffisant d'avoir simplement recours à un brûleur interne, alors que pour des tirées élevées, l'inducteur annulaire s'avérait nécessaire, le brûleur interne venant optionnellement le compléter avantageusement.

L'invention a également pour objet un procédé de formation de fibres minérales " fines " de diamètre inférieur ou égal à 3 µm par centrifugation interne associée à un étirage gazeux à haute température, mettant notamment en oeuvre le dispositif décrit plus haut. Ce procédé prévoit de déverser le matériau à fibrer dans un centrifugeur dont la bande périphérique est percée d'orifices, avec une hauteur de fibrage (définie plus haut) du centrifugeur inférieure ou égale à 35 mm, notamment d'au plus 32,5 mm et avantageusement comprise entre 16 et 32,5 mm.

Le centrifugeur est avantageusement celui dont les caractéristiques ont été décrites plus haut.

L'étirage gazeux à chaud est avantageusement opéré par un brûleur annulaire dont on peut choisir les paramètres de fonctionnement de la façon suivante :
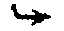 on peut de préférence régler la température des gaz en sortie de brûleur à au moins 1350°C, notamment au moins 1400°C et par exemple entre 1400 et 1500°C, notamment entre 1430 et 1470°C. On adapte ensuite la température en fonction du type de composition minérale à fibres, suivant notamment son comportement viscosimétrique. Ces valeurs de température se sont révélées les plus favorables pour produire des fibres " fines ",
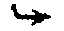 avantageusement, on règle aussi la vitesse des gaz émis par le brûleur à au moins 200 m/s, mesurée juste à la sortie des lèvres du brûleur) notamment à des valeurs comprises entre 200 et 295 m/s,
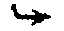 enfin, on règle de préférence la largeur annulaire des gaz en sortie de brûleur à des valeurs comprises entre 5 mm et 9 mm.

Quand le procédé de l'invention a recours à un moyen pour canaliser les gaz d'étirage à chaud et/ou le matériau éjecté des orifices du centrifugeur sous l'effet de la force centrifuge, il s'agit avantageusement d'une couronne de soufflage du gaz qui est au plus à température ambiante, et sous une pression de gaz d'alimentation comprise entre 0,5 et 2,5.10⁵ Pa, notamment 0,7 à 2.10⁻⁵ Pa.

En fait, dans le contexte de l'invention, l'utilisation d'une couronne de soufflage s'est avérée particulièrement avantageuse : ses jets d'air " froid " (généralement à température ambiante) ont un effet de refroidissement bénéfique vis-à-vis des fibres en cours d'étirement, et cela tout particulièrement quand il s'agit de fibres " fines " qui intéressent l'invention. Ce refroidissement évite en effet un " sur-étirage " des fibres et des turbulences qui tendent à les raccourcir, à les fragiliser. Il contribue donc à garantir de bonnes propriétés mécaniques aux fibres, ce qui est d'autant plus important qu'ici la zone de fibrage est réduite en hauteur par rapport à un fibrage de fibres de dimensions standard : on a ainsi une distinction nette, et avantageuse, entre d'une part la zone d'étirage soumise à l'influence du brûleur annulaire et la zone de refroidissement soumise à l'influence du souffleur annulaire (ce dernier reste cependant optionnel).

On peut recourir à un inducteur pour chauffer la zone la plus basse du centrifugeur et éviter ou limiter la création d'un gradient de température sur la hauteur du centrifugeur. Cependant comme ici le centrifugeur a une hauteur relativement faible, il n'est qu'optionnel. Comme mentionné plus haut, on peut aussi, cumulativement ou alternativement, avoir recours à un brûleur interne.

Le procédé selon l'invention permet d'alterner des capacités de production tout-à-fait compatibles avec les impératifs économiques, vu la qualité de la fibre obtenue (généralement moins de 1,5 à 2 % en poids de grains/infibrés par exemple). On a pu ainsi obtenir des tirées de fibres de diamètre compris entre 2 et 3 µm, par exemple 2,6 µm, de l'ordre de 0,5 kg par jour et par orifice de centrifugeur, ce qui correspond à des tirées industrielles de l'ordre de 2500 à 7700 kg par jour et par centrifugeur pour des centrifugeurs de diamètre moyen 400 mm et de hauteur de fibrage entre 16 et 32,5 mm.

L'invention a également pour objet l'utilisation des fibres obtenues par le dispositif et/ou le procédé décrits plus haut, d'au plus 3 µm de diamètre, dans la fabrication de papier notamment en vue de réaliser des filtres ou des séparateurs de batteries.

L'invention a également pour objet le papier, incorporant ces fibres " fines " de diamètre au plus 3 µm (généralement entre 2 et 3 µm) et des fibres minérales " très fines " de diamètre au plus 1 µm (généralement entre 0,2 et 0,8 µm). Si l'invention porte plutôt sur des fibres " fines ", il n'est pas exclu qu'elle se rapporte également à la fabrication de fibres " très fines ".

Avantageusement, la proportion massique entre les deux types de fibres est comprise entre 25/75 et 75/25, notamment aux environs de 60/40 à 40/60.

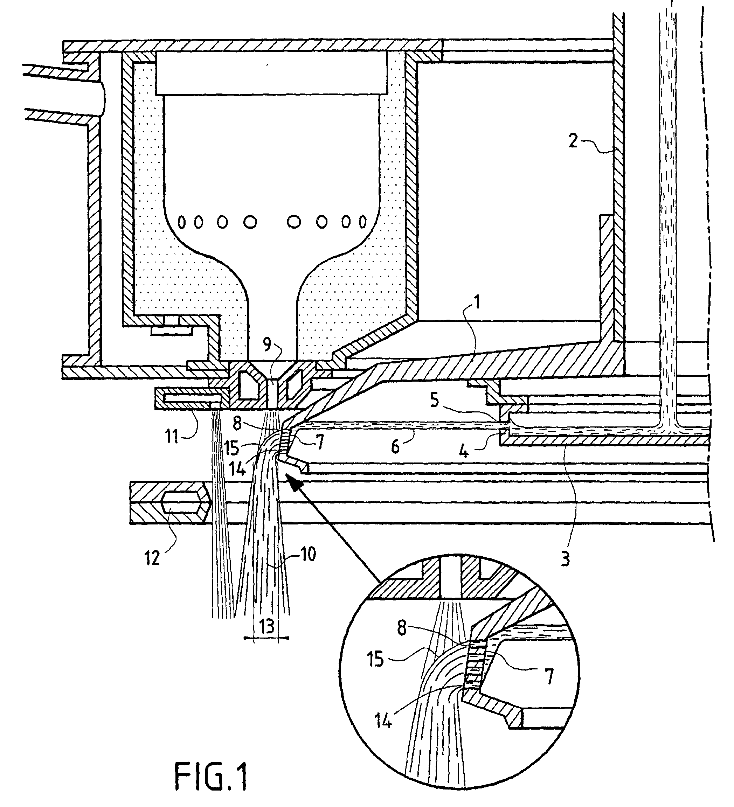

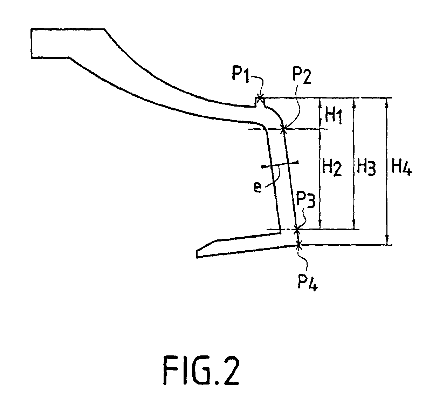

L'invention sera détaillée ci-après à l'aide d'exemples non limitatifs illustrés par les figures suivantes :
□ **figure 1 :** une vue partielle du dispositif de centrifugation selon l'invention,
□ **figure 2** : une vue partielle en coupe du centrifugeur selon la figure 1.

La figure 1 représente donc une vue partielle d'un système de centrifugeur interne à étirage par gaz chaud adapté à partir de ceux connus de l'art antérieur et décrits notamment, dans les brevets EP-91 866, EP-189 354 et EP-519 797, auxquels on se reportera pour plus de détails sur la généralité de ce mode de fibrage.

Le système comprend un centrifugeur 1 fixé sur un arbre 2. L'arbre et le centrifugeur sont animés d'un mouvement de rotation rapide au moyen d'un moteur non représenté. L'arbre 2 est creux et le verre à l'état fondu s'écoule depuis les moyens d'alimentation non représentés dans l'arbre 2 jusqu'au " panier " 3 dans lequel se répand le verre fondu. Le panier 3 est également entraîné en rotation de sorte que le verre fondu est projeté sur la paroi périphérique 4 qui est percée d'orifices et, de là, sous forme de filets volumineux 6 sur la paroi périphérique 7 du centrifugeur 1, qui vont former sur cette paroi une réserve permanente de verre fondu venant alimenter les orifices circulaires 14 percés dans ladite paroi. Cette paroi 7 est inclinée d'environ 5 à 10° par rapport à la verticale. Des très nombreux orifices circulaires 14 disposés en rangées, sortent des cônes d'écoulement 8 se prolongeant en avant-fibres 15, projetées dans le courant gazeux annulaire émis par le brûleur 9. Sous l'action de ce courant, ces avant-fibres s'étirent, leur portion terminale générant des fibres 10 discontinues ensuite collectées sous le centrifugeur. Le système comporte en outre une couronne de soufflage 11 qui crée une " nappe gazeuse " entourant le courant gazeux annulaire généré par le brûleur 9. On utilise également optionnellement une couronne d'induction 12 sous le centrifugeur 1 et/ou un brûleur interne non représenté.

Dans des conditions standards de fonctionnement, un tel dispositif permet d'obtenir des fibres de diamètre moyen d'au moins 4 µm, notamment de l'ordre de 5 jusqu'à 12 µm.

L'invention a donc consisté à obtenir des fibres remplissant les critères suivants :
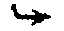 un diamètre moyen d'au plus 3 µm, notamment entre 2,3 et 3 µm, par exemple centré sur 2,6 ou 2,8 ou 3 µm,
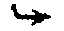 avec un faible taux de défauts (grains, infibrés, fibres recollées), notamment d'au plus 2% en poids de fibres fabriquées,
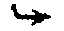 avec des propriétés mécaniques suffisamment élevées pour qu'elles puissent renforcer des papiers dans des applications de filtres ou de séparateurs de batteries, dont notamment une résistance à la traction d'au moins 1,3 lb/inch, soit au moins environ 228 N/m, mesurée selon une méthode standardisée sur un équipement de mesure spécifique à l'industrie papetière.
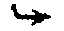 avec une tirée satisfaisante pour ce type de fibres, notamment d'au moins 0,5 kg de fibres par jour et par orifice de centrifugeur.

Deux types de compositions de verre ont été testés, le type " 1 " et le type " 2 ". Le tableau 1 ci-dessous indique pour chacun d'entre eux les pourcentages pondéraux de leurs constituants et la valeur de leur température T_{log3} en °C qui est la température des compositions quand leur viscosité est égale, en poises, à log 3 (le taux en Fe₂O₃ correspond au taux de fer total de la composition exprimé sous cette forme oxydée).

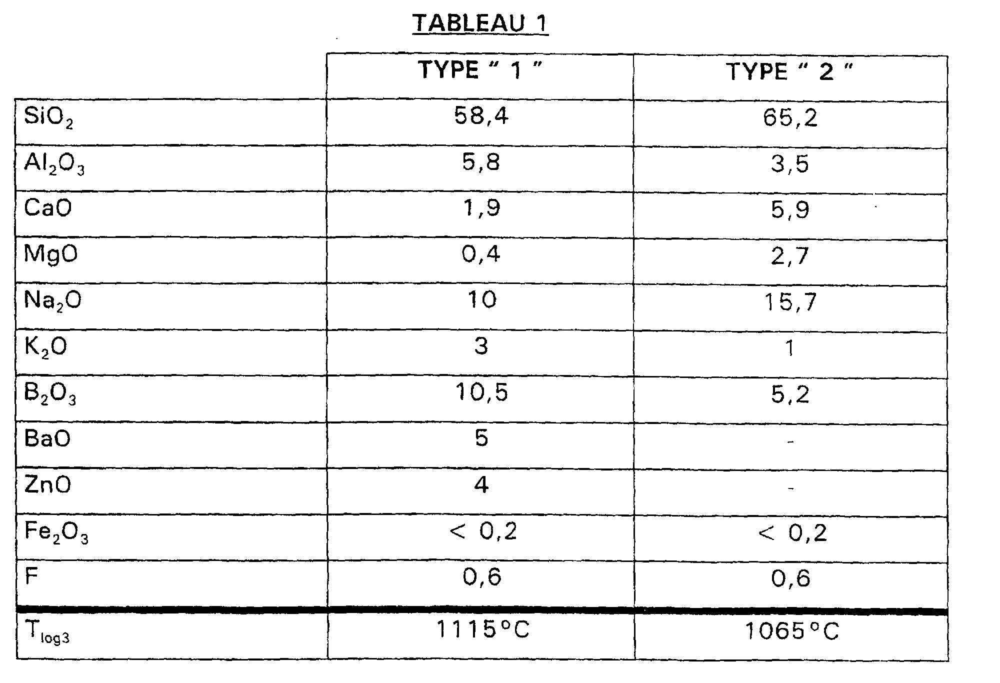

L'adaptation la plus significative faite dans le cadre de l'invention pour atteindre les objectifs selon l'invention a concerné les dimensions de l'assiette de centrifugation, dont la vue en coupe a été agrandie à la figure 2.

Les assiettes choisies sont d'un diamètre D de 400 mm.

On caractérise leur bande périphérique par différentes dimensions, et plus particulièrement :
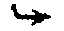 la hauteur de la première rangée d'orifices H₁, mesurée entre le point P₁ le plus haut de la bande périphérique et le niveau P2 de la première rangée,
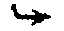 la hauteur de perçage H₂, correspondant à la distance séparant la première rangée P2 de la dernière rangée P3,
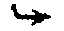 la hauteur de fibrage H₃, correspondant à la distance entre le point P₁ le plus haut de la bande périphérique et la dernière rangée P3,
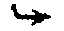 la hauteur totale H₄, correspondant à la distance entre le point le plus haut P1 et le point le plus bas P4 de la bande périphérique.

D'autres paramètres sont aussi caractéristiques, notamment :
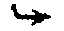 l'épaisseur e de l'assiette,
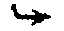 le nombre d'orifices total N,
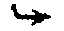 le pas de décalage des orifices d'une rangée à l'autre,
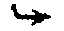 le nombre d'orifices n par rangée,
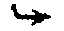 le nombre de rangées r
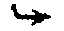 la répartition des diamètres d'orifices selon les rangées.

En ce qui concerne les dimensions de la bande périphérique, la plus caractéristique est H₃ la hauteur de fibrage. lci, on la diminue jusqu'à des valeurs comprises entre par exemple 16 et 32,5 mm.

Le tableau 2 ci-dessous regroupe des exemples de gammes de valeurs pour H₁, H₂, H₃, H₄, exprimées en mm :

**TABLEAU 2**

| | |
|---|---|
| H₁ | 6 - 10 |
| H₂ | 10 - 25,5 |
| H₃ | 16 - 32,5 |
| H₄ | 20 - 36,5 |

Le nombre de rangées r peut varier par exemple de 7 à 22 rangées, notamment 9 à 20 rangées, avec notamment de 600 à 770 orifices par rangée,

Le nombre d'orifices N total par assiette peut ainsi être de 5000 à 16 940 trous.

Avantageusement, on prévoit que le diamètre des orifices est compris entre 0,9 et 0,7 mm, avec une répartition de diamètre par rangée telle que le diamètre des orifices décroît du haut vers le bas. Ainsi, on peut avoir 3 rangées d'orifices à 0,9 mm, puis 3 rangées d'orifices à 0,8 mm puis 3 rangées d'orifices de 0,7 mm du haut vers le bas, soit n₁ rangées de diamètre d₁, n₂ rangées de diamètre d₂, nᵢ rangées de diamètre dᵢ, etc... avec généralement n₁, n₂, nᵢ, ... au moins égal à 2, et dᵢ > dᵢ₊₁.

Un tel gradient décroissant dans la taille des orifices contribue à l'obtention de fibres de plus grande qualité.

De façon complémentaire au choix de la dimension des centrifugeurs, l'invention a également porté sur des adaptations de certains paramètres de fonctionnement.

Ainsi, on préfère choisir une température de gaz en sortie de brûleur annulaire 9 élevée, que l'on ajuste cependant en fonction de la dureté du verre que l'on veut fibrer, évaluée par exemple par sa température T_{log3} : la température des gaz est choisie ici vers 1430°C à 1470°C pour les verres de types 1 et 2.

On a aussi constaté que la combinaison du gradient dans le perçage des orifices du centrifugeur avec une configuration particulière du centrifugeur permettait l'obtention de fibres de propriétés mécaniques améliorées. Cette configuration consiste, notamment, à régler de façon appropriée la hauteur du panier dans le centrifugeur de façon à ce que le panier alimente plutôt la partie supérieure de la " réserve ".

En conclusion, les modifications apportées au procédé de centrifugation interne ont permis d'obtenir des fibres fines de haute qualité et faisables économiquement et industriellement.

## Revendications

1. Dispositif de centrifugation interne de fibres minérales fines de diamètre inférieur ou égal à 3 µm comprenant un centrifugeur (1) muni d'une bande périphérique percée d'orifices, ***caractérisé en ce que*** la hauteur de fibrage (H₃) dudit centrifugeur (1), définie par la distance séparant le point le plus haut de ladite bande périphérique des orifices les plus bas de celle-ci en considérant le centrifugeur en position de centrifugation, est inférieure ou égale à 35 mm, ***et en ce que*** les orifices (14) du centrifugeur (1) sont regroupés en rangées disposées en cercles concentriques sur la hauteur de la bande périphérique, avec au moins deux rangées adjacentes ayant des diamètres d'orifices différents.

2. Dispositif selon la revendication 1 ***caractérisé en ce que*** la hauteur de fibrage (H₃) est inférieure ou égale à 32,5mm.

3. Dispositif selon la revendication 2 ***caractérisé en ce que*** la hauteur de fibrage (H₃) est comprise entre 16 et 32,5mm.

4. Dispositif selon l'une des revendications précédentes, ***caractérisé en ce que*** le diamètre des orifices (14) décroît par rangée, du haut vers le bas de la bande périphérique du centrifugeur en position de centrifugation.

5. Dispositif selon l'une des revendications précédentes, ***caractérisé en ce que*** le centrifugeur (1) présente un diamètre moyen (D) inférieur ou égal à 800mm, notamment d'au moins 200 mm.

6. Dispositif selon l'une des revendications précédentes, ***caractérisé en ce* que** le diamètre (d) d'au moins une partie des orifices du centrifugeur (1) est d'au plus 1,5 ou 1,2 mm, notamment compris entre 1,1 et 0,5 mm, par exemple entre 0,9 et 0,7 mm.

7. Dispositif selon l'une des revendications précédentes, ***caractérisé en ce que*** les rangées d'orifices sont espacées les unes des autres d'une distance comprise entre 1 et 2 mm, notamment entre 1,2 et 1,8 mm, avec de préférence un pas de décalage d'une rangée à l'autre compris entre 1 et 2 mm, par exemple entre 1,3 et 1,8 mm et un espacement entre deux orifices d'une même rangée compris entre 2,2 et 1,4 mm, par exemple entre 2,1 et 1,6 mm.

8. Dispositif selon l'une des revendications précédentes, ***caractérisé en ce qu'il*** comprend au moins un moyen d'étirage gazeux à haute température sous forme d'un brûleur annulaire (9).

9. Dispositif selon la revendication 8, ***caractérisé en ce qu'il*** comprend au moins un moyen pour canaliser les gaz d'étirage à haute température et/ou la matière minérale éjectée du centrifugeur (1) sous forme d'une couronne de soufflage (11 ) de gaz à température ambiante.

10. Dispositif selon l'une des revendications précédentes, ***caractérisé en* ce *qu'il*** comprend un moyen de chauffage externe des parois du centrifugeur, notamment la partie la plus basse du centrifugeur (1) en position de centrifugation, sous forme d'un inducteur (12) et/ou un moyen de chauffage interne du type brûleur interne.

11. Procédé de formation de fibres minérales fines de diamètre inférieur ou égal à 3 µm, par centrifugation interne associée à un étirage gazeux à haute température, où le matériau à fibrer est déversé dans un centrifugeur (1) dont la bande périphérique est percée d'orifices **(14), *caractérisé en ce* que** la hauteur de fibrage (H₃) dudit centrifugeur (1), définie par la distance séparant le point le plus haut de ladite bande périphérique des orifices les plus bas de celle-ci en considérant le centrifugeur en position de centrifugation, est inférieure ou égale à 35 mm, ***et en ce que*** les orifices (14) du centrifugeur (1) sont regroupés en rangées disposées en cercles concentriques sur la hauteur de la bande périphérique, avec au moins deux rangées adjacentes ayant des diamètres d'orifices différents.

12. Procédé selon la revendication 11, ***caractérisé en ce que*** l'étirage gazeux à haute température est opéré par un brûleur annulaire (9), avec une température de gaz en sortie de brûleur d'au moins 1350°C, notamment d'au moins 1400°C, de préférence comprise entre 1400 et 1500°C.

13. Procédé selon la revendication 12, ***caractérisé en ce que*** le brûleur annulaire (9) génère des gaz d'étirage ayant une vitesse d'au moins 200 m/s, notamment comprise entre 200 et 295 m/s, avec de préférence une largeur annulaire en sortie de brûleur comprise entre 5 et 9 mm.

14. Procédé selon l'une des revendications 11 à 13, ***caractérisé en ce qu'****il* utilise un moyen pour canaliser les gaz d'étirage à haute température et/ou le matériau à fibrer éjecté du centrifugeur, sous forme d'une couronne de soufflage (11) de gaz au plus à température ambiante dont la pression de gaz d'alimentation est notamment comprise entre 0,5.10⁻⁵ et 2.10⁵ Pa.

15. Procédé selon l'une des revendications 11 à 14, ***caractérisé en ce qu'il*** utilise un moyen de chauffage externe du type inducteur (12) pour chauffer la zone la plus basse du centrifugeur et/ou un moyen de chauffage interne du type brûleur interne.

16. Utilisation des fibres minérales de diamètre au plus 3 µm obtenues par le dispositif selon l'une des revendications 1 à 10 et/ou par le procédé selon l'une des revendications 11 à 15, pour fabriquer des papiers, notamment en vue de réaliser des filtres, des éléments séparateurs de batteries.

17. Papier incorporant des fibres minérales de diamètre au plus 3 µm, notamment compris entre 2 et 3 µm, obtenues selon le dispositif selon l'une des revendications 1 à 10 et/ou le procédé selon l'une des revendications 11 à 15 et des fibres minérales de diamètre d'au plus 1 µm, notamment de diamètre compris entre 0,2 et 0,8 µm.

## Claims

1. Apparatus for internally centrifuging fine mineral fibres with a diameter less than or equal to 3 µm, comprising a centrifuge (1) equipped with a peripheral belt in which holes have been drilled, **characterised in that** the height (H₃) to which said centrifuge (1) draws out the fibres - defined by the distance that separates the uppermost point of said peripheral belt from the lowermost holes in said belt when the centrifuge is viewed in its centrifuging position - is less than or equal to 35 mm, and that the holes (14) of the centrifuge (1) are arranged in rows disposed in concentric circles over the height of the peripheral belt, with at least two adjacent rows presenting different hole diameters.

2. Apparatus according to claim 1, **characterised in that** the fibre-drawing height (H₃) is less than or equal to 32.5 mm.

3. Apparatus according to claim 2, **characterised in that** the fibre-drawing height (H₃) is between 16 and 32.5 mm.

4. Apparatus according to any of the preceding claims, **characterised in that** the diameter of the holes (14) decreases with each row, from the top to the bottom of the peripheral belt of the centrifuge in the centrifuging position.

5. Apparatus according to any of the preceding claims, **characterised in that** the centrifuge (1) has a mean diameter (D) less than or equal to 800 mm, more particularly not less than 200 mm.

6. Apparatus according to any of the preceding claims, **characterised in that** the diameter (d) of at least some of the holes of the centrifuge (1) is not more than 1.5 or 1.2 mm, more particularly between 1.1 and 0.5 mm, for example between 0.9 and 0.7 mm.

7. Apparatus according to any of the preceding claims, **characterised in that** the rows of holes are spaced apart from one another by a distance of between 1 and 2 mm, more particularly between 1.2 and 1.8 mm, preferably with an interval of between 1 and 2 mm from one row to the next, for example between 1.3 and 1.8 mm, and a spacing of between 2.2 and 1.4 mm, for example between 2.1 and 1.6 mm, between two holes in any one row.

8. Apparatus according to any of the preceding claims, **characterised in that** it includes at least one high-temperature gas drawing means in the form of an annular burner (9).

9. Apparatus according to claim 8, **characterised in that** it includes at least one means for conducting the high-temperature drawing gases and/or the mineral material ejected from the centrifuge (1), in the form of a blowing ring (11) for gas at the ambient temperature.

10. Apparatus according to any of the preceding claims, **characterised in that** it includes an external heating means for the walls of the centrifuge, more particularly the lowermost part of the centrifuge (1) in the centrifuging position, in the form of an inductor (12) and/or an internal heating means of the internal burner type.

11. Method for forming fine mineral fibres with a diameter less than or equal to 3 µm, by internal centrifugation thereof in association with a high-temperature gas drawing process, where the material that is being made into fibres is poured into a centrifuge (1) the peripheral belt of which is drilled with holes (14), **characterised in that** the height (H₃) to which said centrifuge (1) draws out the fibres - defined by the distance that separates the uppermost point of said peripheral belt from the lowermost holes in said belt when the centrifuge is viewed in its centrifuging position - is less than or equal to 35 mm, and that the holes (14) of the centrifuge (1) are arranged in rows disposed in concentric circles over the height of the peripheral belt, with at least two adjacent rows presenting different hole diameters.

12. Method according to claim 11, **characterised in that** the high-temperature gas drawing process is carried out by an annular burner (9), with a gas exit temperature from the burner of not less than 1350°C, more particularly not less than 1400°C, and preferably between 1400 and 1500°C.

13. Method according to claim 12, **characterised in that** the annular burner (9) generates drawing gases with a velocity of at least 200 m/s, more particularly between 200 and 295 m/s, and preferably with an annular width of between 5 and 9 mm at the burner exit.

14. Method according to any of claims 11 to 13, **characterised in that** said method utilises a means for conducting the high-temperature drawing gases and/or the material for fibre-making which has been ejected from the centrifuge, in the form of a blowing ring (11) for gas at no higher than the ambient temperature, the gas feed pressure of which is more particularly between 0.5.10⁻⁵ and 2.10⁵ Pa.

15. Method according to any of claims 11 to 14, **characterised in that** said method utilises an external heating means of the inductor type (12) to heat the lowermost zone of the centrifuge and/or an internal heating means of the internal burner type.

16. Use of the mineral fibres with a diameter of not more than 3 µm obtained using the apparatus according to any of claims 1 to 10 and/or by the method according to any of claims 11 to 15, for manufacturing papers, more particularly with a view to producing filters and battery dividers.

17. A paper incorporating mineral fibres with a diameter of not more than 3 µm, more particularly between 2 and 3 µm, obtained with the apparatus according to any of claims 1 to 10 and/or by the method according to any of claims 11 to 15, and mineral fibres with a diameter of not more than 1 µm, more particularly between 0.2 and 0.8 µm.

## Patentansprüche

1. Vorrichtung zum Innenzentrifugieren feiner Mineralfasern mit einem Durchmesser von höchstens 3 µm, welche eine Zentrifuge (1) umfasst, die mit einem mit Öffnungen durchbohrten umfänglichen Mantel versehen ist, **dadurch gekennzeichnet, dass** die Spinnhöhe (H₃) der Zentrifuge (1), die durch die Entfernung festgelegt ist, die den höchsten Punkt des umfänglichen Mantels von dessen tiefsten Öffnungen trennt, wobei die Zentrifuge in Zentrifugierposition betrachtet wird, höchstens 35 mm beträgt, und **dass** die Öffnungen (14) der Zentrifuge (1) zu über die Höhe des umfänglichen Mantels in konzentrische Kreisen angeordneten Reihen zusammengefasst sind, wobei die Öffnungen mindestens zweier einander benachbarter Reihen einen unterschiedlichen Durchmesser besitzen.

2. Vorrichtung nach Anspruch 1, **dadurch gekennzeichnet, dass** die Spinnhöhe (H₃) höchstens 32,5 mm beträgt.

3. Vorrichtung nach Anspruch 2, **dadurch gekennzeichnet, dass** die Spinnhöhe (H₃) 16 bis 32,5 mm beträgt.

4. Vorrichtung nach einem der vorhergehenden Ansprüche, **dadurch gekennzeichnet, dass** der Durchmesser der Öffnungen (14) des umfänglichen Mantels der Zentrifuge in Zentrifugierposition von oben nach unten pro Reihe kleiner wird.

5. Vorrichtung nach einem der vorhergehenden Ansprüche, **dadurch gekennzeichnet, dass** der mittlere Durchmesser (D) der Zentrifuge (1) höchstens 800 mm und insbesondere mindestens 200 mm beträgt.

6. Vorrichtung nach einem der vorhergehenden Ansprüche **dadurch gekennzeichnet, dass** der Durchmesser (d) mindestens eines Teils der Öffnungen der Zentrifuge (1) höchstens 1,5 oder 1,2 mm und insbesondere 1,1 bis 0,5 mm, beispielsweise zwischen 0,9 und 0,7 mm, beträgt.

7. Vorrichtung nach einem der vorhergehenden Ansprüche, **dadurch gekennzeichnet, dass** die Öffnungsreihen mit einer Entfernung voneinander beabstandet sind, die 1 bis 2 mm und insbesondere zwischen 1,2 und 1,8 mm beträgt, wobei vorzugsweise ein Versatz von einer Reihe zur nächsten von 1 bis 2 mm, beispielsweise zwischen 1,3 und 1,8 mm, und ein Abstand zwischen zwei Öffnungen ein und derselben Reihe von 2,2 bis 1,4 mm, beispielsweise zwischen 2,1 und 1,6 mm herrscht.

8. Vorrichtung nach einem der vorhergehenden Ansprüche, **dadurch gekennzeichnet, dass** sie mindestens ein bei hoher Temperatur arbeitendes Gasziehmittel in Form eines Ringbrenners (9) umfasst.

9. Vorrichtung nach Anspruch 8, **dadurch gekennzeichnet, dass** sie mindestens ein Mittel zum Leiten der sich auf hoher Temperatur befindenden Ziehgase und/oder des von der Zentrifuge (1) hinausgeschleuderten mineralischen Materials in Form eines geblasenen Rings (11) aus sich auf Umgebungstemperatur befindendem Gas enthält.

10. Vorrichtung nach einem der vorhergehenden Ansprüche, **dadurch gekennzeichnet, dass** sie ein äußeres Mittel zum Beheizen der Wände der Zentrifuge, insbesondere des in Zentrifugierposition untersten Teils der Zentrifuge (1), in Form eines Induktors (12) und/oder ein inneres Beheizungsmittel wie einen Innenbrenner enthält.

11. Verfahren zur Bildung feiner Mineralfasern mit einem Durchmesser von höchstens 3 µm durch mit einem bei hoher Temperatur stattfindenden Gasziehvorgang verbundenes Innenzentrifugieren, wobei das zu verspinnende Material in eine Zentrifuge (1) gefüllt wird, deren umfänglicher Mantel mit Öffnungen (14) durchbohrt ist, **dadurch gekennzeichnet, dass** die Spinnhöhe (H₃) der Zentrifuge (1), die durch die Entfernung festgelegt ist, die den höchsten Punkt des umfänglichen Mantels von dessen tiefsten Öffnungen trennt, wobei die Zentrifuge in Zentrifugierposition betrachtet wird, höchstens 35 mm beträgt, **und dass** die Öffnungen (14) der Zentrifuge (1) zu über die Höhe des umfänglichen Mantels in konzentrische Kreisen angeordneten Reihen zusammengefasst sind, wobei die Öffnungen mindestens zweier einander benachbarter Reihen einen unterschiedlichen Durchmesser besitzen

12. Verfahren nach Anspruch 11, **dadurch gekennzeichnet, dass** das bei hoher Temperatur stattfindende Gasziehen von einem Ringbrenner (9) durchgeführt wird, wobei die Gastemperatur am Brennerausgang mindestens 1 350 °C, insbesondere mindestens 1 400 °C, und vorzugsweise 1 400 bis 1 500 °C beträgt.

13. Verfahren nach Anspruch 12, **dadurch gekennzeichnet, dass** der Ringbrenner (9) ein Ziehgas, dessen Geschwindigkeit mindestens 200 m/s und insbesondere 200 bis 295 m/s beträgt, mit vorzugsweise einer Ringbreite am Brennerausgang von 5 bis 9 mm erzeugt.

14. Verfahren nach einem der Ansprüche 11 bis 13, **dadurch gekennzeichnet, dass** ein Mittel zum Leiten des sich auf hoher Temperatur befindenden Ziehgases und/oder des von der Zentrifuge (1) hinausgeschleuderten mineralischen Materials in Form eines geblasenen Rings (11) aus sich auf höchstens Umgebungstemperatur befindendem Gas verwendet wird, dessen Versorgungsgasdruck insbesondere 0,5·10⁻⁵ bis 2·10⁵ Pa beträgt.

15. Verfahren nach einem der Ansprüche 11 bis 14, **dadurch gekennzeichnet, dass** ein äußeres Beheizungsmittel vom Typ eines Induktors (12) zum Erhitzen der untersten Zone der Zentrifuge und/oder ein inneres Beheizungsmittel vom Typ eines Innenbrenners verwendet wird/werden.

16. Verwendung der Mineralfasern mit einem Durchmesser von höchstens 3 µm, die durch die Vorrichtung nach einem der Ansprüche 1 bis 10 und/oder das Verfahren nach einem der Ansprüche 11 bis 15 erhalten worden sind, zur Herstellung von Papier, insbesondere für die Ausbildung von Filtern und von Separatoren für Batterien.

17. Papier, das Mineralfasern mit einem Durchmesser von höchstens 3 µm und insbesondere von 2 bis 3 µm, die durch die Vorrichtung nach einem der Ansprüche 1 bis 10 und/oder das Verfahren nach einem der Ansprüche 11 bis 15 erhalten worden sind, und Mineralfasern mit einem Durchmesser von höchstens 1 µm und insbesondere 0,2 bis 0,8 Um enthält.
